# DEMANDE DE BREVET EUROPEEN

(11) **EP 1 479 572 A1**
(43) Date de publication de la demande: **24.11.2004**
(21) Numéro de dépôt: 04290807.9
(22) Date de dépôt: 25.03.2004
(51) Int. Cl.: B60R 21/20

(54) **Dispositif de coussin gonflable avec couronne de liaison**

(30) Priorité: 23.05.2003 FR 0306259
(71) Demandeur: Centre d'Etude et de Recherche pour l'Automobile ( CERA), 51100 Reims (FR)
(72) Inventeur: Quintana, Carles, 17220 Sant Feliu de Guixols Girona (ES); Marcos Chamorro, Jose, 08186 Lliça d'Amunt Barcelone (ES)
(74) Mandataire: Geismar, Thierry

(57) **Abrégé**

L'invention concerne un élément de siège de véhicule automobile comprenant une armature (4), un corps en mousse (2), un revêtement (3) et un dispositif de coussin gonflable (5), ledit dispositif étant fixé sur l'armature (4) et logé dans un logement (6) du corps en mousse (2) et le revêtement (3) étant découpé autour de la périphérie du dispositif de coussin gonflable (5), ledit élément de siège comprenant une couronne de liaison (9) comprenant une jupe périphérique (10) qui est surmoulée dans le corps en mousse (2) et des organes de fixation (11) qui sont associés au dispositif de coussin gonflable (5).

L'invention concerne également un procédé de réalisation d'un tel élément de siège.

## Description

L'invention concerne un élément de siège de véhicule automobile comprenant un dispositif de coussin gonflable, ainsi qu'un procédé de réalisation d'un tel élément de siège.

Les dispositifs de coussin gonflable disposés dans l'habitacle des véhicules automobiles ont pour fonction, en cas de choc, de protéger les passagers en s'interposant entre ces derniers et tout élément potentiellement dangereux de la structure du véhicule automobile.

Dans une application particulière, les dispositifs à coussin gonflable sont destinés à protéger les passagers en cas de choc latéral. De tels systèmes peuvent être disposés dans un élément de siège, par exemple dans le dossier des sièges du véhicule automobile, plus particulièrement dans un dormant de ce dossier.

Le dispositif de coussin gonflable peut présenter une paroi visible dans l'élément de siège et le revêtement de l'élément doit être découpé autour de cette paroi.

Il se pose alors un problème d'association des bords de la découpe du revêtement avec le dispositif de coussin gonflable. Une solution connue consiste à coudre des profilés sur les bords de la découpe et à clipper ces profilés dans une gorge latérale du dispositif de coussin gonflable.

Cette solution présente plusieurs inconvénients, notamment lorsque est utilisée la technique de moulage « in-situ » permettant l'obtention de l'élément de siège directement en sortie de moule.

En effet, dans le cas de profilés cousus sur les bords de la découpe, celle-ci doit être réalisée avant l'expansion de la mousse. La disposition du revêtement dans le moule doit alors être précise afin que la découpe soit au bon endroit dans l'élément de siège fini. Le temps d'habillage se trouve donc accru.

De plus, il existe des possibilités de fuite de la mousse par la découpe au cours de l'expansion de celle-ci.

Du fait de la présence de la découpe, il faut également distinguer entre les revêtements pour un siège à droite du véhicule et pour un siège à gauche du véhicule. Deux types de revêtement doivent donc être confectionnés, ce qui ralentit les cadences de production.

En outre, l'aspect visuel après fixation du revêtement n'est pas satisfaisant à cause de dispersions de découpe et des coutures avec les profilés qui sont visibles.

Enfin, l'inviolabilité du dispositif à coussin gonflable n'est pas assurée. En effet, il est assez facile d'introduire les doigts entre le revêtement et le dispositif là où aucun profilé n'est cousu au revêtement.

L'invention vise à palier ces inconvénients en proposant d'associer le dispositif de coussin gonflable à une couronne de liaison surmoulée dans le corps en mousse de l'élément de siège.

A cet effet et selon un premier aspect, l'invention concerne un élément de siège de véhicule automobile comprenant une armature, un corps en mousse, un revêtement et un dispositif de coussin gonflable, ledit dispositif étant fixé sur l'armature et logé dans un logement du corps en mousse et le revêtement étant découpé autour de la périphérie du dispositif de coussin gonflable. L'élément de siège comprend une couronne de liaison comprenant une jupe périphérique qui est surmoulée dans le corps en mousse et des organes de fixation qui sont associés au dispositif de coussin gonflable.

Selon un deuxième aspect, l'invention concerne un procédé de réalisation d'un élément de siège tel que décrit ci-dessus, comprenant les étapes suivantes :
- disposer une couronne de liaison et une coiffe formant revêtement dans une cavité de moulage agencée pour former, après expansion d'une mousse, un corps en mousse comprenant un logement, la jupe périphérique de la couronne étant surmoulée dans le corps en mousse ;
- découper le revêtement autour de la périphérie du logement ;
- monter le corps en mousse revêtu sur l'armature de façon à ce que le dispositif de coussin gonflable soit disposé dans le logement du corps en mousse ;
- associer la couronne de liaison au dispositif de coussin gonflable ;
- remborder les bords de découpe du revêtement autour de la périphérie du dispositif de coussin gonflable.

La couronne permet d'éviter d'avoir à découper le revêtement avant le moulage de l'élément de siège et de devoir coudre des profilés sur les bords de la découpe.

Il en résulte un montage et un habillage aisés de l'élément de siège, ainsi qu'un bon aspect visuel de l'élément de siège. La couronne garantie en outre l'inviolabilité du dispositif de coussin gonflable. De plus, il n'est pas nécessaire de faire la distinction entre un revêtement pour siège droit et un revêtement pour siège gauche puisque la découpe est faite après la confection de l'élément de siège.

D'autres objets et avantages de l'invention apparaîtront au cours de la description qui suit, faite en référence aux dessins annexés.

La figure 1 est un vue de dessus schématique en coupe d'une partie d'un élément de siège selon l'invention dans laquelle un dispositif de coussin gonflable est intégré.

La figure 2 est une vue en perspective d'une couronne de liaison utilisée dans un élément de siège selon l'invention.

Les figures 3 à 6 sont des représentations schématiques illustrant différentes étapes d'un procédé de réalisation d'un élément de siège selon l'invention.

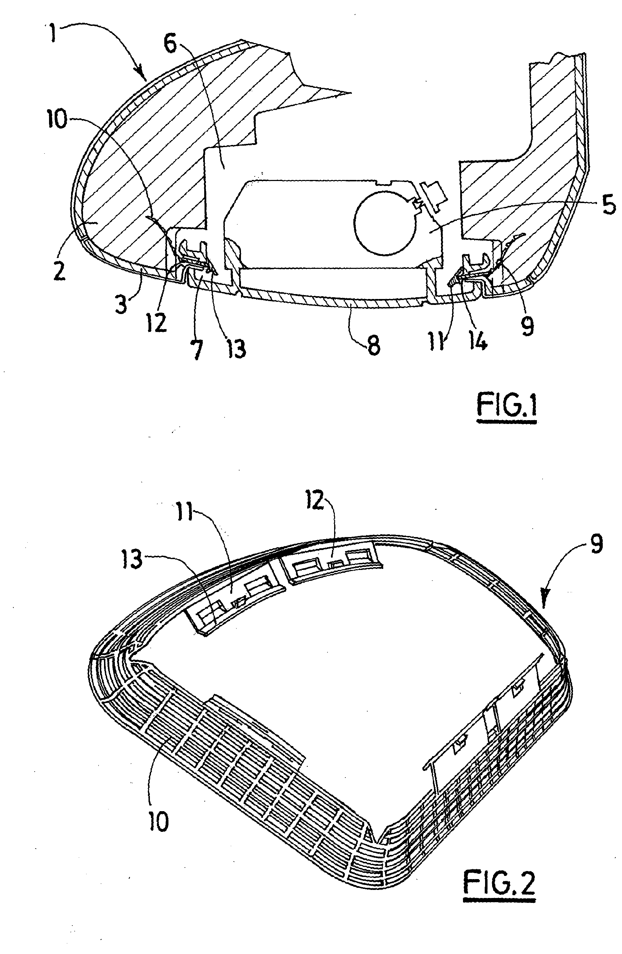

Comme représenté sur la figure 1, l'élément de siège 1 comprend un corps en mousse 2, un revêtement 3 garnissant le corps en mousse. Le corps en mousse est prévu pour être monté sur une armature de siège 4 (non représentée sur la figure 1) sur laquelle est fixé un dispositif de coussin gonflable 5

Le dispositif de coussin gonflable 5 est disposé dans un logement débouchant 6 prévu dans le corps en mousse 2.

Le dispositif 5 est agencé de telle manière qu'une de ses parois 8 est visible depuis l'habitacle du véhicule automobile. Cette paroi 8 est agencée pour pouvoir libérer un passage pour le gonflement du coussin en cas de choc latéral. A cet effet, le revêtement 3 est découpé autour de la périphérie du dispositif 5.

Une couronne de liaison 9 est prévue autour de la périphérie du dispositif 5 pour associer celui-ci au corps en mousse 2. A cet effet, une gorge latérale 7, dont l'ouverture est tournée vers l'intérieur du corps en mousse 2, s'étend autour de la périphérie du dispositif de coussin gonflable 5 à partir de la face visible 8 de celui-ci.

La couronne de liaison est par exemple réalisée en matériau plastique.

La couronne présente par exemple la forme générale d'une pyramide à base carrée tronquée afin que la partie de cette couronne entourant le dispositif de coussin gonflable présente une forme complémentaire de celui-ci.

En se référant aux figures 1 et 2, la couronne de liaison 9 comprend une jupe périphérique 10 surmoulée dans le corps en mousse 2 et des organes de fixation 11 de la couronne dans la gorge latérale 7 du dispositif 5.

Les organes de fixation 11 comprennent chacun une paroi 12 s'étendant à partir de la jupe périphérique 10 vers le centre de la couronne 9. Des moyens de clipsage 13 sont prévus à l'extrémité libre de la paroi 12. Ces moyens sont adaptés pour être clipsés dans la gorge latérale 7. A cet effet, la gorge latérale 7 est pourvue de fentes 14 dans lesquelles les moyens de clipsage 13 peuvent être insérés.

On peut, par exemple prévoir de disposer des organes de fixation 11 sur au moins deux des côtés de la jupe périphérique 10.

La jupe périphérique 10 est perforée, de façon à améliorer sa flexibilité. De plus les perforations dans la jupe permettent à la mousse de passer au travers. On peut ainsi assurer une bonne fixation de la jupe 10 dans le corps en mousse 2.

La jupe 10 présente une forme évasée à partir des organes de fixation 11. Cette forme permet d'assurer un ancrage efficace car la jupe 10 résiste aussi bien aux contraintes latérales qu'aux contraintes transversales qui lui sont imposées.

Les bords de la découpe du revêtement 3 sont insérés, dans les fentes 14, entre les organes de fixation 11 de la couronne et la gorge latérale 7. Ces bords sont ainsi retenu de façon simple sans nécessité de coudre des profilés.

L'inviolabilité du dispositif de coussin gonflable 5 est assurée car la couronne 9 entoure complètement ce dernier. On ne peut donc pas glisser ses doigts entre le revêtement 3 et le dispositif 5.

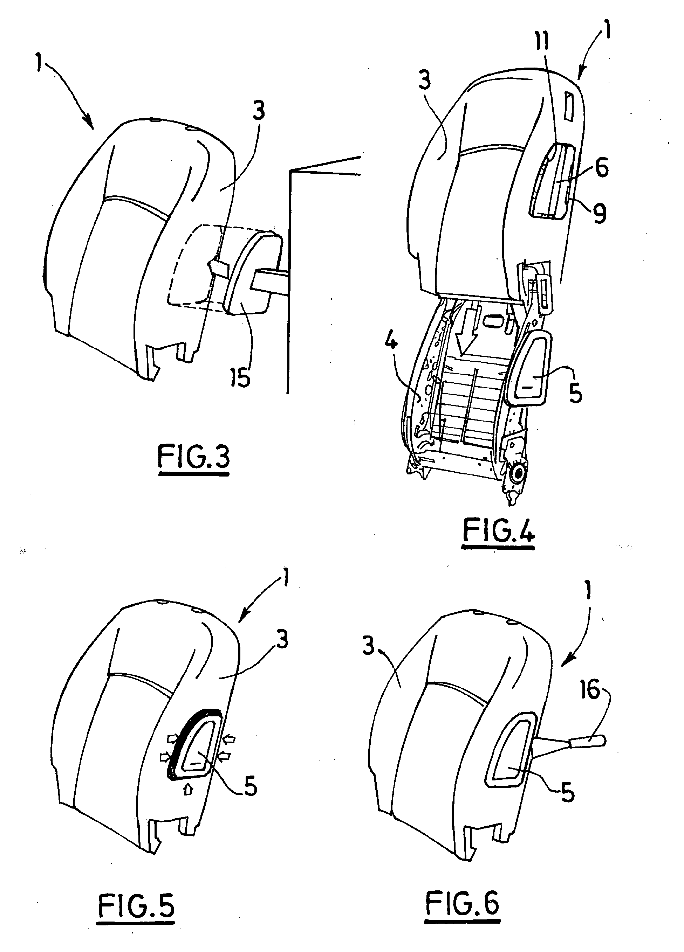

Un procédé de réalisation d'un élément de siège 1, tel que présenté ci-dessus, va maintenant être décrit en référence aux figures 3 à 6.

La première étape du procédé consiste à disposer et à positionner de manière appropriée la couronne 9 et une coiffe formant revêtement 3 sans découpe dans une cavité de moulage.

Cette cavité de moulage est agencée de manière à ce qu'un logement 6 soit formé dans le corps en mousse 2 après expansion de la mousse. La couronne 9 est positionnée de manière à ce que les organes de fixation 11 se trouvent dans le logement 6 après expansion de la mousse.

Un mélange précurseur de mousse est introduit dans la cavité de moulage. Après expansion de la mousse, on obtient un corps en mousse 2 pourvu d'un logement 6 et revêtu par le revêtement 3. Cet ensemble est démoulé.

En référence à la figure 3, la découpe du revêtement 3 est ensuite réalisée, par exemple au moyen d'un outil de découpe 15. Cette découpe est réalisée autour de la périphérie du logement 6 de façon à libérer un passage vers l'intérieur de ce logement.

En référence à la figure 4, le corps en mousse 2 est ensuite monté sur l'armature 4 du siège sur laquelle le dispositif de coussin gonflable 5 a été préalablement fixé. Ce montage est réalisé de façon à ce que le dispositif 5 se trouve dans le logement 6.

On associe la couronne 9 au dispositif 5 par enclipsage des organes de fixation 11 dans la gorge latérale 7 du dispositif de coussin gonflable 5, comme indiqué par les flèches sur la figure 5. Cette association est facilitée par la flexibilité de la couronne 9 qui permet d'éviter des déchirement de la mousse lors de la manipulation de la couronne.

On notera que dans le mode de réalisation représenté, deux côtés de la couronne 9 comprennent chacun deux organes de fixation 11 et un troisième côté comprend un organe de fixation.

La dernière étape du procédé consiste à effectuer le positionnement final du revêtement 3, c'est à dire le rembordement des bords de la découpe. Ces bords sont introduits entre les organes de fixation 11 et la gorge latérale 7, par exemple au moyen d'une spatule 16.

La jupe 10 plonge immédiatement dans la mousse, ce qui élimine le risque d'apparition de « vagues » sur le revêtement 3 autour du dispositif de coussin gonflable 5.

## Revendications

1. Elément de siège de véhicule automobile comprenant une armature (4), un corps en mousse (2), un revêtement (3) et un dispositif de coussin gonflable (5), ledit dispositif étant fixé sur l'armature (4) et logé dans un logement (6) du corps en mousse (2) et le revêtement (3) étant découpé autour de la périphérie du dispositif de coussin gonflable (5), ledit élément de siège étant **caractérisé en ce qu'**il comprend une couronne de liaison (9) comprenant une jupe périphérique (10) qui est surmoulée dans le corps en mousse (2) et des organes de fixation (11) qui sont associés au dispositif de coussin gonflable (5).

2. Elément de siège selon la revendication 1, **caractérisé en ce que** la couronne de liaison (9) s'étend autour de la périphérie du dispositif de coussin gonflable (5).

3. Elément de siège selon l'une quelconque des revendications 1 ou 2, **caractérisé en ce que** le dispositif de coussin gonflable (5) comprend une gorge latérale (7), les organes de fixation (11) de la couronne (9) étant clipsés dans ladite gorge.

4. Elément de siège selon l'une quelconque des revendications 1 à 3, **caractérisé en ce que** les organes de fixation (11) de la couronne (9) comprennent chacun une paroi (12) s'étendant à partir de la jupe périphérique (10) et des moyens de clipsage (13) s'étendant à partir de ladite paroi.

5. Elément de siège selon l'une quelconque des revendications 1 à 4, **caractérisé en ce que** la jupe périphérique (10) présente des perforations.

6. Elément de siège selon l'une quelconque des revendications 1 à 5, **caractérisé en ce que** la jupe périphérique (10) est évasée à partir des organes de fixation (11 ).

7. Elément de siège selon l'une quelconque des revendications 1 à 6, **caractérisé en ce que** les bords de la découpe du revêtement (3) autour de la périphérie du dispositif de coussin gonflable (5) sont insérés et retenus entre la gorge latérale (7) et les organes de fixation (11 ).

8. Procédé de réalisation d'un élément de siège (1) selon l'une des revendications 1 à 7, **caractérisé en ce qu'**il comprend les étapes suivantes :
- disposer une couronne de liaison (9) et une coiffe formant revêtement (3) dans une cavité de moulage agencée pour former, après expansion d'une mousse, un corps en mousse comprenant un logement (6), la jupe périphérique (10) de la couronne (9) étant surmoulée dans le corps en mousse (2) ;
- découper le revêtement (3) autour de la périphérie du logement (6) ;
- monter le corps en mousse (2) revêtu sur l'armature (4) de façon à ce que le dispositif de coussin gonflable (5) soit disposé dans le logement (6) du corps en mousse (2) ;
- associer la couronne de liaison (9) au dispositif de coussin gonflable (5) ;
- remborder les bords de découpe du revêtement (3) autour de la périphérie du dispositif de coussin gonflable (5).
